(19) Europäisches Patentamt
European Patent Office
Office européen des brevets

(11) **EP 1 410 676 B1**

(12) **EUROPEAN PATENT SPECIFICATION**

(45) Date of publication and mention
of the grant of the patent:
**21.04.2010 Bulletin 2010/16**

(51) Int Cl.:
***H04Q 11/04*** *(2006.01)*   ***H04L 12/56*** *(2006.01)*

(21) Application number: **01909758.3**

(22) Date of filing: **14.02.2001**

(86) International application number:
**PCT/EP2001/001688**

(87) International publication number:
**WO 2001/060108 (16.08.2001 Gazette 2001/33)**

(54) **METHOD FOR TRANSMISSION OF MESSAGES SPLIT OVER SEVERAL PACKETS**

VERFAHREN ZUR ÜBERTRAGUNG VON NACHRICHTEN VERTEILT IN MEHREREN PAKETEN

PROCEDE D'EMISSION PAR DIVISION DE MESSAGES EN PLUSIEURS PAQUETS

(84) Designated Contracting States:
**DE ES FR GB IT**

(30) Priority: **14.02.2000 EP 00200478**

(43) Date of publication of application:
**21.04.2004 Bulletin 2004/17**

(73) Proprietor: **Thomson Licensing**
**92443 Issy-les-Moulineaux Cedex (FR)**

(72) Inventors:
• **JEANNE, Ludovic**
**92648 Boulogne Cedex (FR)**

• **DORE, Renaud**
**92648 Boulogne Cedex (FR)**
• **FONTAINE, Patrick**
**92648 Boulogne Cedex (FR)**

(74) Representative: **Kohrs, Martin et al**
**Thomson**
**1, rue Jeanne d'Arc**
**92443 Issy-les-Moulineaux Cedex (FR)**

(56) References cited:
**EP-A- 0 697 777    EP-A- 0 969 622**

Printed by Jouve, 75001 PARIS (FR)

# EP 1 410 676 B1

**Description**

The invention concerns a method for the transmission of messages split over several packets. The method particularly applies to devices in a wireless Hiperlan 2 environment.

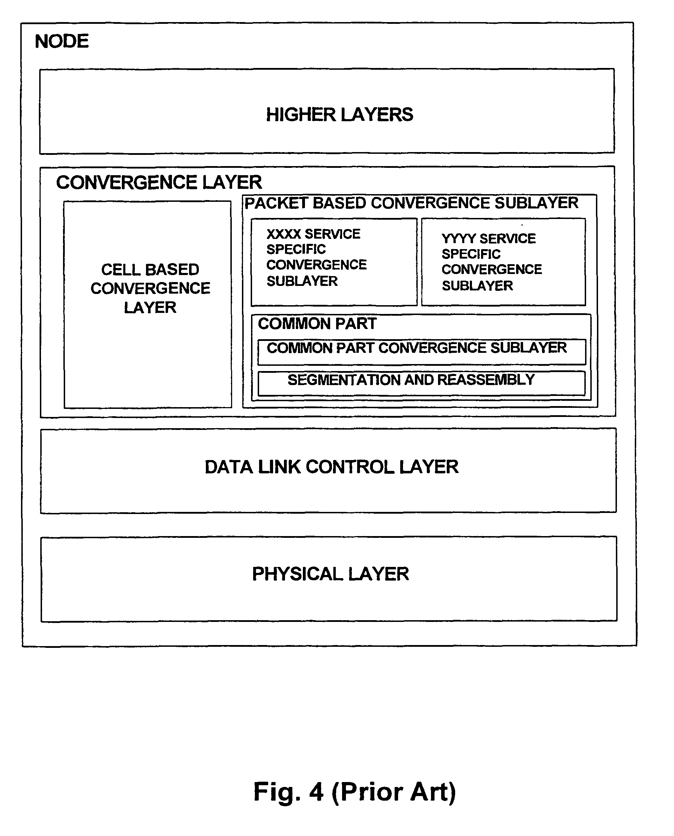

Figure 4 represents the protocol stack of a transmitter or a receiver node in a Hiperlan 2 wireless network. From bottom to top, the stack comprises a physical layer ('PHY'), a data link control Layer ('DLC'), a convergence layer ('CL'), followed by higher layers. The convergence layer CL may be of several types, in particular of the cell based type or of the packet based type. The packet based convergence layer comprises a number of service specific convergence sublayers ('SSCS'). Examples of SSCS layers currently specified or under specification concern the Ethernet or the IEEE 1394 environment. Below this specific sublayer, a common part convergence sublayer ('CPCS') is included, followed by a segmentation and reassembly sublayer ('SAR').

The present application concerns more particularly the behavior of the packet based convergence layer and of the data link control layer.

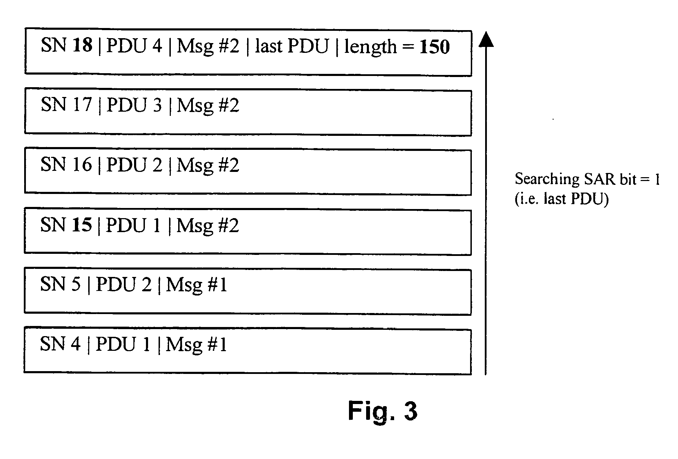

In a Hiperlan2 receiver, a CPCS packet is split into several DLC packet data units ('PDUs') of fixed length (54 bytes). Figure 3 is an illustration of the contents of a DLC PDU.

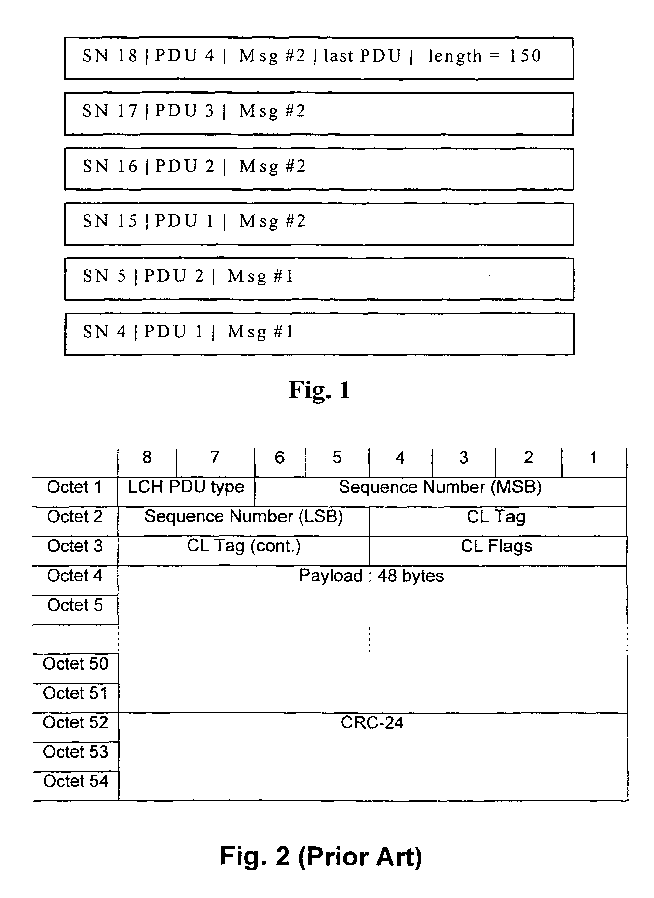

If the DLC layer discarded some PDUs, the CPCS packet received may be missing in part. Therefore, the Segmentation And Reassembly layer may receive PDU sequences such as the one depicted by figure 1 from the DLC layer.

Since only one stop bit is sent for each CPCS message, if one DLC PDU containing a stop bit has been discarded by the DLC layer, the CPCS sublayer will discard two CPCS packets during the length check based on the packet length information received.

EP0969622 (MICROSOFT CORP) 5 January 2000 deals with a transmission system in which a message is transported over the network as packet payload. A packet comprises a sequence number, a message identifier and the payload. All packets transporting a same message have an identical message identifier. The last packet corresponding to a message comprises a flag indicating that it is the last packet for this particular message.

The invention concerns a process to reassemble the first message correctly received, and to discard only the CPCS PDU for which some DLC PDUs have not been received.

The object of the invention is a method for processing received packets in a transmission system comprising an emitter device and a receiver device, a message from the emitter being split into packets of fixed length for transmission to the receiver, an indication of message length N being transmitted with at least one packet relating to the message, characterized by the steps of:

- receiving packets and storing packets in memory according to a sequence number order of the packets;

- upon reception of an end-of-message packet, determining the number of packets necessary to contain the message based on the length indication;

- retrieving the determined number of packets in memory, backtracking from the packet having greatest sequence number and using these retrieved packets to reconstitute the message;

- discarding other packets in memory.

Other characteristics and advantages of the invention will appear through the description of a non-limiting embodiment, illustrated by the drawings among which:

- Figure 1, already described, is an erroneous PDU sequence which may be received by a receiver.

- Figure 2, already described and prior art is a table indicating the format of a DLC PDU.

- Figure 3 illustrates the processing of the erroneous sequence of figure 1 by the receiver according to the present invention.

- Figure 4, already described and prior art is a diagram of the protocol stack in a Hiperlan 2 node.

The present invention concerns a Hiperlan 2 type network, but is not necessarily limited to such a specific environment. Information relating to the Hiperlan 2 network can be found in the corresponding ETSI documents, and in particular the following documents:

(a) <DTS/BRAN0020004-1> V0.m (1999-12) Broadband Radio Access Networks (BRAN); HIPERLAN Type 2; Data Link Control (DLC) Layer - Part 1: Basic Data Transport Function

(b) <DTS/BRAN-0020004-4> V0.e (2000-01) Broadband Radio Access Networks (BRAN); HIPERLAN Type 2 Functional Specification - Data Link Control (DLC) Layer - Part 4 - Extension for Home Environment

(c) DTS/BRAN-0024004-1 V0.g (1999-11) Broadband Radio Access Networks (BRAN); HIPERLAN Type 2; Packet based Convergence Layer; Part 1: Common Part

Document (c) in particular concerns the SAR and CPCS layers.

According to document (c) above, the CPCS layer sends a message (called CPCS SDU) to the SAR layer. The SAR layer splits the CPCS packet into payloads of at most 48 bytes, which are included into fixed-size packets called SAR PDUs. The last packet of a message contains a flag ('stop bit') in its header, identifying it as the last packet. This packet also contains an indication of the length of the whole message. This indication is contained in the trailer of the CPCS PDU, and is always located at bytes 50 and 51. Since the payload of SAR PDUs has a fixed length of 48 bytes, padding bytes are added to the CPCS PDU to obtain a length equal to a multiple of 48 bytes. These padding bytes are added in front of the trailer, so that the trailer has a fixed location in the SAR PDU, i.e. occupies the last four bytes of the payload. The SAR PDUs are transmitted to the DLC layer.

The DLC layer of a transmitter maps each SAR PDU to one DLC PDU. It also maintains a sequence number counter for packets it sends or receives. Before sending a DLC PDU, the sequence number counter is increased. When the receiver receives an incorrect PDU, it negatively acknowledges the corresponding PDU. When the transmitter receives the acknowledgement, it must re-transmit the corresponding PDU. The receiver asks the transmitter to re-send the incorrect PDU until it is correctly received. Therefore, the Convergence Layer of a receiver is ensured that if a received PDU is the last of a message, then the message has been completely and correctly received, unless some PDU packets of the message were discarded by the transmitter.

The DLC layer of a receiver may receive PDUs in an order other than that of the Sequence Numbers. The DLC layer reorders the DLC PDUs before transmitting the SAR PDUs, which correspond to a part of the DLC PDUs, to the SAR. Thus the SAR will always receive SAR PDUs in the right order, although some SAR PDUs may be missing.

The description of a DLC PDU is depicted by figure 2.

According to the present embodiment, in order to discard the partially received message and to reconstruct the first valid message, the DLC layer of the receiver first finds and reads the length field of the PDU that contains a SAR stop bit set to 1. This stop bit is one of the bits in the 'CL Flags' field of the DLC PDU header (figure 2). The location of the length field corresponds to the last two bytes of the payload of that SAR PDU.

It is supposed that the DLC PDUs are written into a buffer, along with their headers and CRC redundant bytes, as illustrated by figure 1.

The mechanism described below is used to find the first PDU of the first valid message. This process is illustrated by figure 3.

Both figures 1 and 3 are a representation of a buffer of the receiver, in which incoming PDU packets have been stored. For the purpose of the explanation, each packet is illustrated as being labelled with a sequence number 'SN', representing the sequence number in each PDU header. For clarity purposes, each PDU packet is also given a rank ('PDU x') corresponding to its order in each message ('Msg #y').

(1) Determination of the length of the first valid CPCS message:

The length of a DLC PDU payload is 48 bytes. The length of a whole DLC PDU is 54 bytes, which includes three header bytes and three CRC bytes.

The length of the message trailer of a standard CPCS-PDU Hyperlan2 message is four bytes. This trailer contains the length field on its last two bytes. The length excludes any padding bytes.

The number of DLC PDUs required to transmit a CPCS message as a function of its length is then:

$$N= Int( (length+3)/48 ) + 1$$

According to the present example, the length is equal to 150 bytes:

$$N = Int( (150+3)/48 ) +1 = 4$$

(i.e. SN 15 to 18)

$$\text{Sequence Number of the First PDU} = (\text{SN of Last PDU}) - Int( (length+3)/48 )$$

$$= 18 - Int( (150+3)/48 ) = 15$$

After having calculated the location of the first PDU, the message can be reassembled by the SAR layer. In the example above, the PDUs with SN equal to 15 to 18 are used to constitute a message. In the last PDU (SN = 18), only the 150-48x3 = 6 first bytes belong to the message, the others bytes are the padding bytes and the trailer bytes. The DLC layer transfers the corresponding information to the convergence layer.

The others PDUs (SN 4 and 5) are ignored because they are supposed to constitute the start of an incomplete message, of which the last PDU has been discarded by the transmitter.

The receiver continues to analyze incoming PDUs to check whether they contain a stop bit and proceeds as above.

Although the PDUs in figure 1 and 3 are associated with their DLC layer sequence number for the purpose of the explanation, this is not required for implementing the invention. It suffices to store fixed length packets in the right order for an upper layer and to know the length of the message contained in these packets.

The method above has been applied to PDUs received by the DLC layer. A similar backtracking process may be applied by other layers, for example the CPCS layer.

Concerning the last CPCS SDU reconstitution, it is possible to calculate directly the location of the CPCS SDU header. Moreover, if the destination of the message in the CPCS layer is not a FIFO but a RAM, it may be interesting to begin the storage of data starting at the end of the message. The CPCS message is a multiple of 48 bytes, since it still includes the padding bytes. In order to avoid having to carry out divisions in the message reconstruction algorithm, we iteratively subtract the length of one fragment (48 bytes, i.e. a DLC PDU payload) from the value of the length field for each fragment contained in the RAM, up to the last fragment and in the inverse reception order, i.e. starting from the last fragment received. This last fragment contains at least some trailer and padding bytes.

A pointer called 'PDU_READ' is defined:

a- PDU_READ is defined as the location in the buffer of the last byte of the CPCS PDU.
A length value is also defined. The length value carries the number of bytes of the CPCS SDU contained in the last fragment. The field is located at the end of the payload (just before the CRC24)
b- The entire CPCS message, including trailer and padding bytes (a multiple of 48 bytes) is stored in RAM, to be accessed by the CPCS. The length field is read at the end of the message.
c- If the length >= 48 bytes then
The length value is reduced by 48 bytes.

$$PDU\_READ = PDU\_READ - 48$$

Continue step (b).
d- If the length >= 45 then (and therefore < 48)
This means that the last 48 byte fragment of the CPCS PDU contained only the padding bytes and the trailer, since the trailer has a length of four bytes, is not spread over two fragments (payloads) and is always located at the end of a fragment. That last fragment was the first to be read in step (a).
e- If the length =< 44 then
The current fragment is extracted (entire payload). It is the first fragment of the CPCS PDU and we know now how many bytes were stored in the last DLC PDU, corresponding to the first fragment of 48 bytes read in memory: it is the remaining value given by the length parameter. The number of padding bytes can now also be deduced. It corresponds to 48, minus the remaining length and minus the length of the trailer. The padding bytes can thus be eliminated from the message.

## Claims

1. Method for processing received packets in a transmission system comprising an emitter device and a receiver device, a message from the emitter being split into packets of fixed length for transmission to the receiver, an indication of message length N being transmitted with at least one packet relating to the message, wherein each packet further comprises a sequence number and a last packet of a message comprising a piece of data identifying it as the last packet of the message,
   **characterized by** the steps of,

   - receiving packet corresponding to a plurality of messages and storing said packets in a memory according to a sequence number order of the packets;
   - upon reception of an end-of-message packet, determining the number of packets necessary to contain the message based on the length indication;
   - retrieving the determined number of packets in memory, backtracking from the packet having greatest sequence number and using these retrieved packets to reconstitute the message;
   - discarding other packets stored in the memory.

2. Method according to claim 1, wherein the message length indicator is located at a predetermined position within the last packet of a message.

## Patentansprüche

1. Verfahren zum Verarbeiten empfangener Pakete in einem Übertragungssystem, das eine Sendervorrichtung und eine Empfängervorrichtung umfasst, wobei eine Nachricht von dem Sender zur Übertragung an den Empfänger in Pakete fester Länge verteilt wird, wobei mit mindestens einem Paket im Zusammenhang mit der Nachricht eine Angabe der Nachrichtenlänge N übertragen wird, wobei jedes Paket ferner eine laufende Nummer umfasst und wobei ein letztes Paket einer Nachricht eine Dateneinheit umfasst, die es als das letzte Paket der Nachricht identifiziert,
   wobei das Verfahren durch die folgenden Schritte **gekennzeichnet** ist:

   - Empfangen von Paketen, die mehreren Nachrichten entsprechen, und Speichern der Pakete in einem Speicher in Übereinstimmung mit einer Reihenfolge der laufenden Nummer der Pakete;
   - Bestimmen der Anzahl von Paketen, die notwendig sind, um die Nachricht zu enthalten, anhand der Längenangabe beim Empfang eines Nachrichtenendepakets;
   - Wiedergewinnen der bestimmten Anzahl von Paketen im Speicher, Zurückverfolgen von dem Paket mit der höchsten laufenden Nummer und Verwenden dieser wiedergewonnenen Pakete zum Wiederherstellen der Nachricht;
   - Verwerfen anderer in dem Speicher gespeicherter Pakete.

2. Verfahren nach Anspruch 1, bei dem sich der Nachrichtenlängenindikator an einer vorgegebenen Stelle in dem letzten Paket einer Nachricht befindet.

## Revendications

1. Procédé de traitement de paquets reçus dans un système de transmission comprenant un dispositif émetteur et un dispositif récepteur, un message issu de l'émetteur étant divisé en paquets de longueur fixe pour une transmission vers le récepteur, une indication de la longueur N du message étant transmise avec au moins un paquet relatif au message, où chaque paquet comprend en outre un numéro de séquence et un dernier paquet d'un message comprenant une portion de données l'identifiant comme le dernier paquet du message,
   **caractérisé par** les étapes consistant à

   - recevoir des paquets correspondant à une pluralité de messages et stocker lesdits paquets dans une mémoire selon un ordre de numéros de séquence des paquets ;

- à la réception d'un paquet de fin de message, déterminer le nombre de paquets nécessaires pour contenir le message en fonction de l'indication de la longueur ;
- récupérer le nombre de paquets déterminé dans la mémoire, revenir en arrière à partir du paquet présentant le numéro de séquence le plus élevé et utiliser ces paquets récupérés pour reconstituer le message ;
- supprimer les autres paquets stockés dans la mémoire.

2. Procédé selon la revendication 1, où l'indicateur de la longueur de message se situe à une position prédéterminée dans le dernier paquet d'un message.

| SN 18 \| PDU 4 \| Msg #2 \| last PDU \| length = 150 |
| --- |

| SN 17 \| PDU 3 \| Msg #2 |
| --- |

| SN 16 \| PDU 2 \| Msg #2 |
| --- |

| SN 15 \| PDU 1 \| Msg #2 |
| --- |

| SN 5 \| PDU 2 \| Msg #1 |
| --- |

| SN 4 \| PDU 1 \| Msg #1 |
| --- |

**Fig. 1**

| | 8 | 7 | 6 | 5 | 4 | 3 | 2 | 1 |
| --- | --- | --- | --- | --- | --- | --- | --- | --- |
| Octet 1 | LCH PDU type | | Sequence Number (MSB) | | | | | |
| Octet 2 | Sequence Number (LSB) | | | | CL Tag | | | |
| Octet 3 | CL Tag (cont.) | | | | CL Flags | | | |
| Octet 4 | Payload : 48 bytes | | | | | | | |
| Octet 5 | | | | | | | | |
| Octet 50 | | | | | | | | |
| Octet 51 | | | | | | | | |
| Octet 52 | CRC-24 | | | | | | | |
| Octet 53 | | | | | | | | |
| Octet 54 | | | | | | | | |

**Fig. 2 (Prior Art)**

7

SN **18** | PDU 4 | Msg #2 | last PDU | length = **150**

SN 17 | PDU 3 | Msg #2

SN 16 | PDU 2 | Msg #2

Searching SAR bit = 1
(i.e. last PDU)

SN **15** | PDU 1 | Msg #2

SN 5 | PDU 2 | Msg #1

SN 4 | PDU 1 | Msg #1

## Fig. 3

NODE

HIGHER LAYERS

CONVERGENCE LAYER

CELL BASED
CONVERGENCE
LAYER

PACKET BASED CONVERGENCE SUBLAYER

XXXX SERVICE
SPECIFIC
CONVERGENCE
SUBLAYER

YYYY SERVICE
SPECIFIC
CONVERGENCE
SUBLAYER

COMMON PART

COMMON PART CONVERGENCE SUBLAYER

SEGMENTATION AND REASSEMBLY

DATA LINK CONTROL LAYER

PHYSICAL LAYER

# Fig. 4 (Prior Art)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0969622 A